Europäisches Patentamt

European Patent Office

Office européen des brevets

(11) Numéro de publication: **0 311 490 B1**

(12) **FASCICULE DE BREVET EUROPEEN**

(45) Date de publication de fascicule du brevet: **09.12.92** (51) Int. Cl.⁵: **B60R 22/20**

(21) Numéro de dépôt: **88402467.0**

(22) Date de dépôt: **29.09.88**

(54) **Mécanisme de maintien pour sangle de ceinture de sécurité à position modifiable manuellement.**

(30) Priorité: **07.10.87 FR 8713865**

(43) Date de publication de la demande:
**12.04.89 Bulletin 89/15**

(45) Mention de la délivrance du brevet:
**09.12.92 Bulletin 92/50**

(84) Etats contractants désignés:
**DE ES GB IT SE**

(56) Documents cités:
**DE-A- 2 460 092**
**DE-A- 3 338 645**
**FR-A- 2 261 023**

(73) Titulaire: **ECIA - EOUIPEMENTS ET COMPO-
SANTS POUR L'INDUSTRIE AUTOMOBILE**

**F-25400 Audincourt (Doubs)(FR)**

(72) Inventeur: **Escaravage, Gérard**
**5 Impasse des Graverots**
**F-25700 Valentigney(FR)**
Inventeur: **Henriot, Michel**

**F-25150 Ecurcey(FR)**

(74) Mandataire: **Mestre, Jean et al**
**c/o CABINET LAVOIX 2, place d'Estienne
d'Orves**
**F-75441 Paris Cédex 09(FR)**

Rank Xerox (UK) Business Services

## Description

La présente invention est relative aux ceintures de sécurité pour véhicule de transport de passagers, notamment terrestre, et a pour objet, plus particulièrement, un mécanisme de maintien pour sangle de ceinture de sécurité à position modifiable manuellement et destiné à être fixé à une structure.

Comme on le sait, pour des raisons de sécurité, les véhicules de transport de passagers sont, habituellement, pourvus de sièges équipés de ceinture de sécurité. C'est par exemple le cas des aéronefs et des véhicules automobiles.

Pour les véhicules automobiles, on utilise habituellement des ceintures de sécurité à deux ou trois points d'ancrage. Lorsqu'on utilise une ceinture de sécurité à trois points d'ancrage, la sangle comprend un brin ventral et un brin pectoral qui traverse la poitrine du porteur à la manière d'une courroie de baudrier.

Lorsqu'on se sert d'une ceinture de sécurité de ce dernier type le brin pectoral occupe une position, par rapport à son porteur, qui est fonction, à la fois, de la morphologie de celui-ci, de la géométrie du véhicule et du siège et, aussi de l'état de fatigue de ce dernier. Dans ces conditions le brin pectoral peut se trouver, dans certains cas, au niveau du cou du porteur. On comprend donc que lors de collision violente, la ceinture de sécurité étant immobilisée sous la commande d'un détecteur d'inertie, le corps du passager se trouve violemment projeté en avant et son cou rencontre la sangle qui peut alors se comporter non plus comme un moyen de sécurité mais comme un objet particulièrement dangereux. En effet, on a pu constater, dans certains cas de collision, des lésions graves du cou provoquées par la ceinture de sécurité et, plus particulièrement, son brin pectoral.

C'est pourquoi on a déjà proposé de faire en sorte que le point d'amarrage supérieur du brin pectoral soit de position réglable pour tenir compte de la morphologie du porteur comparé à la configuration du véhicule.

Différents dispositifs ont déjà été proposés. Très souvent ils sont d une configuration telle que le point d'amarrage supérieur du brin pectoral peut occuper des positions multiples situées à l'intérieur d'un domaine dont l'amplitude tient compte des morphologies extrêmes d'une population comparée à sa moyenne.

Ces dispositifs, qui sont parfois motorisés, sont d'une très grande complexité, Ils font très souvent appel à des mécanismes du type à vis et écrou qui permettent donc de faire varier progressivement la position du point d'amarrage supérieur du brin pectoral.

D'autres modes de réalisation font appel à des cliquets et à des trous par rapport auxquels se déplacent des mécanismes à chariot mobile.

D'autres modes de réalisation mettent en oeuvre des mécanismes à verrou équipé d'un pêne et d'une gâche.

Une solution est illustrée par le document DE-A-2 460 092. Toutefois celle-ci n'est pas totalement satisfaisante car elle fait appel à une cheville supplémentaire de montage du support de sangle qui transmet des efforts de cisaillement à des boulons de fixation.

On comprend donc que tous ces dispositifs sont compliqués et, de ce fait, peu fiables et d'un coût relativement élevé.

L'invention se propose de réaliser un mécanisme de maintien pour sangle de ceinture de sécurité à position modifiable manuellement et destiné à être fixé à une structure qui ne présente pas ce type d'inconvénient, qui soit relativement simple et d'un coût de fabrication et de mise en place relativement modique.

L'invention a pour objet un mécanisme de maintien pour sangle de ceinture de sécurité à position modifiable manuellement et destiné à être fixé à une structure. Le mécanisme selon l'invention, qui est du type exposé dans le préambule de la revendication principale où sont énumérés les éléments connus du document allemand précité, comprend les particularités qui ressortent notamment de la partie caractérisante de celle-ci.

D'autres caractéristiques de l'invention ressortiront de la lecture de la description et des revendications qui suivent et de l'examen du dessin annexé, donné seulement à titre d'exemple, où :

- la Fig.1 est une vue de face d'un mode de réalisation de l'invention ;
- la Fig.2 est une coupe longitudinale de la Fig.1 ;
- la Fig.3 est une vue analogue à celle de la Fig.1 d'une variante d'exécution de l'invention ; et
- la Fig.4 est une coupe longitudinale de la Fig.3.

Les ceintures de sécurité et les agencements destinés à leur montage, en particulier les ceintures de sécurité pour véhicule automobile étant bien connues dans la technique, la description qui suit sera limitée à ce qui concerne directement et indirectement l'invention. Pour le reste le spécialiste du secteur technique considéré pourra puiser dans les solutions classiques à sa disposition pour faire face aux problèmes particuliers qu'il a à résoudre.

Dans la suite les mêmes numéros de référence sont utilisés pour désigner des parties similaires aux fonctions homologues, quel que soit le mode de réalisation.

Comme on peut l'observer en examinant les différentes figures du dessin, à une structure ou coque de véhicule 10 est associé un mécanisme de maintien pour sangle de ceinture de sécurité à position modifiable manuellement suivant l'invention. Ce mécanisme comprend, entre autres, un corps 20, un guide 30, un ressort 40, un support de sangle 50, et éventuellement, un capot 70.

Le mécanisme selon l'invention est notamment destiné à être fixé à une structure ou coque 10 d'une automobile et, plus particulièrement au montant central, ou pied milieu, qui se trouve entre les portières latérales avant et arrière d'un véhicule à quatre portes. Cette structure 10 est par exemple pourvue d'une ouverture 11 et d'un trou 12 sur les rôles desquels on reviendra par la suite.

Le corps 20, de préférence en configuration d'étrier, comprend une embase 21 et des socles d'ancrage 22. Chaque socle d'ancrage se compose d'une branche 221, pratiquement perpendiculaire à l'embase 21, et se termine du côté de son extrémité libre par un rebord 222, comme illustré. S'il y a lieu, ce corps est aussi muni de flancs 23 de préférence dirigés en direction des socles. Du fait de sa configuration le corps 20 ménage un évidement 211 à l'arrière de l'embase 21.

Le guide 30 disposé au droit de l'évidement 211 est pourvu d'au moins deux alvéoles 312 à chacun desquels est associé au moins un appui 313.

Le mécanisme comprend aussi un ressort 40 qui est constitué par exemple d'une âme 41 et de lames 42 et qui est configuré de manière à présenter des ailes 411 pour sa fixation à l'aide de rivets 413 qui le maintiennent sur le guide.

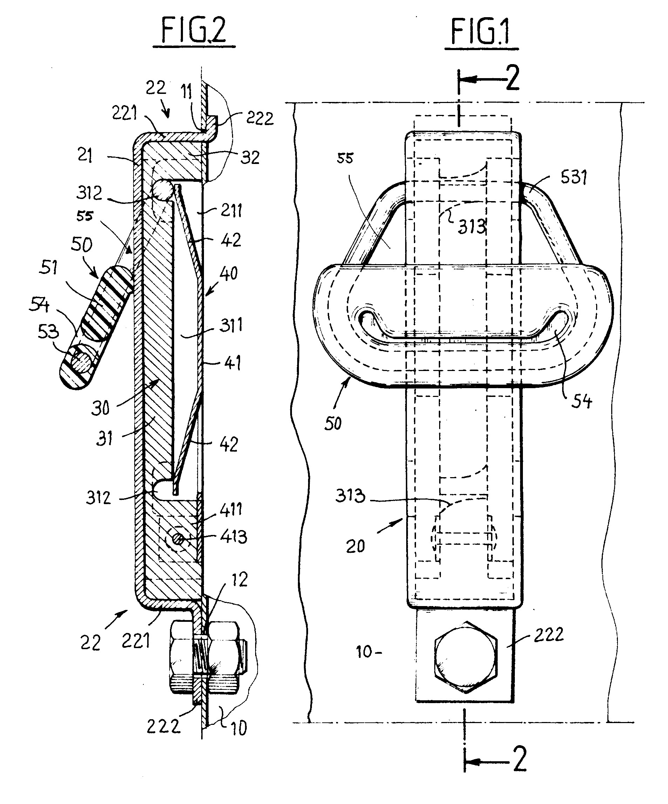

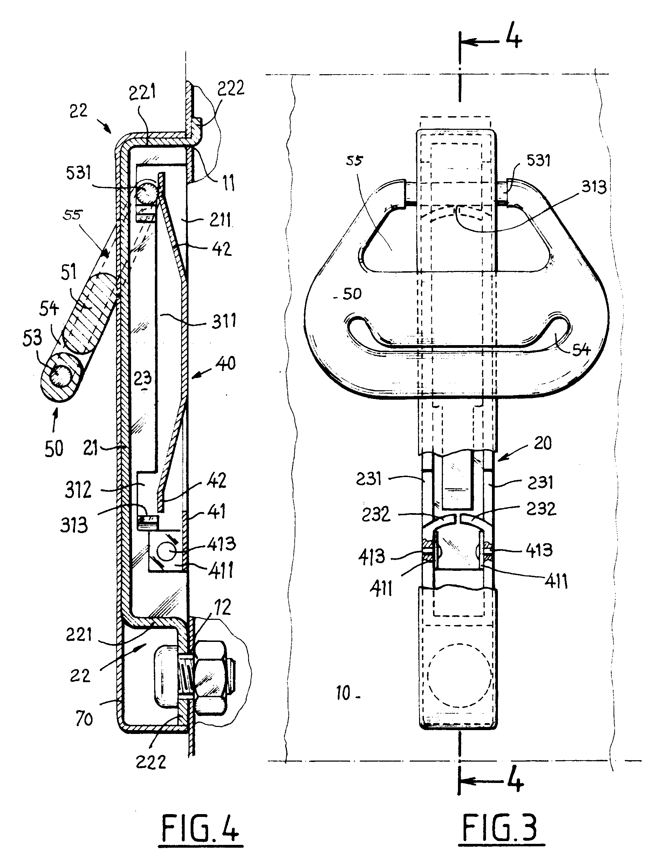

La configuration du ressort 40 est telle que les lames 42 développent un effort à l'aplomb de chaque alvéole 312 et en direction de ces derniers, comme cela apparait clairement sur les Fig.2 et 4 notamment.

Au lieu d'utiliser un ressort unique on peut se servir de ressorts indépendants distincts appropriés.

Le support de sangle 50 se compose d'un bâti 51 équipé d'un renfort 53 et percé d'un passage de sangle 54 et d'un ajour 55, comme on le voit clairement sur les figures du dessin. Le renfort 53 se présente par exemple à la manière d'une tige 531 à coudes multiples dont un tronçon est apparent. Une sangle, non représentée traverse librement le passage 54 où elle peut circuler.

On se reportera maintenant plus spécialement aux Fig.1 et 2 où se trouve illustré un mode de réalisation particulier de l'invention.

Comme on peut l'observer, le guide 30 se compose d'un élément en forme de barre 31 terminée par des piliers 32. La face de la barre 31 qui est à l'opposé du corps 20 ménage un dégagement 311 où sont situés les alvéoles 312 qui sont pourvus d'appuis 313.

Tous les constituants du mécanisme selon l'invention sont assemblés pour présenter la configuration clairement illustrée sur les figures.

Comme on le voit, le guide 30 et le corps 20 traversent l'ajour 55 du support de sangle 50 et la tige 531 du renfort de ce dernier est engagée dans un des alvéoles 312 où elle est retenue par l'effort développé par le ressort fixé au guide par le rivet 413.

Le mécanisme ainsi assemblé est assujetti à la structure. Pour ce faire, on engage un rebord 222 dans l'ouverture 11 appropriée de la structure ou coque 10 et on fixe l'autre rebord 222 à cette structure à l'aide d'un boulon, non référencé, qui traverse le trou 12 et un trou correspondant non plus référencé du rebord, comme illustré à titre d'exemple.

Pour des raisons d'esthétique, s'il y a lieu le mécanisme est recouvert d'un capot 70 approprié comme dans le cas de la variante d'exécution représentée sur les Fig.3 et 4.

Comme on l'observe sur les figures, les appuis 313 des alvéoles 312 sont courbes de manière que la tige 531 du support de sangle puisse basculer dans au moins un sens relativement au corps, pour des raisons de confort du passager.

L'utilisation de ce mode de réalisation du mécanisme selon l'invention est le suivant.

On suppose qu'il est à l'état initial comme illustré sur les Fig.1 et 2. Si l'utilisateur souhaite modifier la position du support de sangle 50, il lui suffit alors de saisir ce dernier, de le repousser en direction de la coque ou structure 10, à l'encontre de l'effort développé par le ressort 40, afin de dégager la tige 531 de l'alvéole 312 puis de faire glisser celle-ci dans le dégagement 311 à l'arrière de la barre 31 du guide 30. En faisant glisser le support de sangle ainsi libéré il est possible de lui faire atteindre l'autre alvéole, à extrémité opposée du guide, où la tige vient s'enclencher après avoir repoussé la lame du ressort.

S'il y a lieu, on peut ménager d'autres alvéoles le long de la barre 31 du guide 30 pour obtenir des positions intermédiaires de réglage.

On saisit donc toute la simplicité et les avantages qui en découlent du mécanisme suivant l'invention.

On se reportera maintenant aux Fig.3 et 4 où est illustrée une variante d'exécution de l'invention. On se limitera donc à ce qui la distingue de la variante d'exécution décrite précédemment.

Comme on le voit, la particularité essentielle réside dans la configuration du guide 30. Dans ce mode de réalisation au lieu d'utiliser un élément distinct, on se sert directement des flancs 23 du corps 20 pour obtenir le guide. Les échancrures 231 sont découpées dans les flancs eux-mêmes et des pattes 232 ainsi dégagées sont pliées et cintrées pour servir aussi d'appuis 313. De même, les flancs 23 sont évidés entre les échancrures de manière à ménager le dégagement 311 nécessaire à la circulation du renfort entre ces diverses positions possibles. Là aussi, dans ce mode de réalisation, seules deux échancrures sont illustrées mais il est clair que l'on peut ménager des échancrures intermédiaires pour avoir plus de deux positions de réglage manuel.

Pour le reste, la manière dont ce mécanisme est assemblé et assujetti à la structure et son mode opératoire sont identiques à ceux de l'exemple précédent.

Ce mode de réalisation est équipé d'un capot 70 enjoliveur approprié convenablement adapté. Le corps 20 est, de préférence, métallique et le support de sangle fait par moulage d'une matière synthétique dans laquelle est noyé le renfort 53, de préférence métallique. Le capot 70 est par exemple fait en matière synthétique comme il est classique.

Ce qui précède illustre bien les avantages que confère le mécanisme selon l'invention du fait de sa très grande simplicité tant en ce qui concerne sa structure, son assemblage et son mode d'utilisation.

## Revendications

1. Mécanisme de maintien pour sangle de ceinture de sécurité à position modifiable manuellement et destiné à être fixé à une structure (10) qui est constitué, entre autres, d'un corps (20) avec une embase (21) et des socles d'ancrage (22) à la structure (10) et d'un support de sangle (50) qui est associé au corps (20) et mobile relativement à ce dernier, dans lequel l'embase (21) et les socles d'ancrage (22) du corps (20) sont agencés de manière à ménager un évidement (211) à l'arrière de l'embase, un guide (30) placé au droit de l'évidement (211) est pourvu d'au moins deux alvéoles (312) à chacun desquels est associé un appui (313), au moins un ressort (40) développe un effort à l'aplomb de chaque alvéole (312) et en direction de ce dernier, mécanisme caractérisé en ce que cet évidement (211) est ouvert latéralement et en ce que le support de sangle (50) qui comprend un renfort (53) et un ajour (55) est associé au corps (20) de manière que son ajour (55) soit traversé par l'embase (21) et le guide (30) et de manière que son renfort (53) puisse s'engager dans un alvéole (312) et reposer contre un appui (313) ou circuler dans l'évidement (211), l'effort développé par le ressort (40) appliquant normalement le renfort (53) dans un alvéole (312).

2. Mécanisme selon la revendication 1 caractérisé en ce que le guide (30) comprend un élément en forme de barre (31) terminée par des piliers (32) qui est logé dans l'évidement (211) et dont la face opposée à l'embase (21) est pourvue d'un dégagement (311) et porte les alvéoles (312) avec leurs appuis (313) pour recevoir le renfort (53) du support de sangle (50).

3. Mécanisme selon la revendication 1, caractérisé en ce que le corps (20) comprend des flancs (23) latéraux dirigés en direction des socles (22) et le guide (30) est constitué de dégagements (311) pratiqués dans les flancs (23) et d'échancrures (231) faites dans ceux-ci pour ménager les alvéoles (312).

4. Mécanisme selon la revendication 3, caractérisé en ce que les échancrures (231) sont bordées de pattes (232) pliées pour former les appuis (313).

5. Mécanisme selon l'une quelconque des revendications 1 à 4, caractérisé en ce que les appuis (313) sont courbes pour autoriser le basculement transversal dans au moins un sens du support de sangle (50) relativement au corps (20).

6. Mécanisme selon l'une quelconque des revendications 1 à 5, caractérisé en ce que le ressort (40) présente une âme (41) avec deux lames (42) agissant à l'aplomb des alvéoles (312) et avec deux ailes (411) de fixation au guide (30).

7. Mécanisme selon l'une quelconque des revendications 1 à 6, caractérisé en ce que le renfort (53) se présente à la manière d'une tige (531) à coudes multiples.

8. Mécanisme selon l'une quelconque des revendications 1 à 7, caractérisé en ce que le corps (20) a la configuration d'un étrier où chaque socle d'ancrage (22) présente une branche (221) normale à l'embase et terminée par un rebord (222).

9. Mécanisme selon l'une quelconque des revendications 1 à 8, caractérisé en ce que le support de sangle (50) est transpercé d'un passage (54) que peut traverser librement une sangle qui peut y circuler.

## Claims

1. Retention mechanism for a safety-belt band of manually adjustable position, intended to be fastened to a structure (10) and consisting of, among other things, a body (20) with a base (21) and mounts (22) for anchoring to the structure (10) and of a band support (50) which is associated with the body (20) and is movable relative to the latter, in which the base (21) and the anchoring mounts (22) of the body (20) are arranged so as to form a recess (211) at the rear of the base, a guide (30) placed in line with the recess (211) is equipped with at least two cells (312), with each of which a stay (313) is associated, at least one spring (40) generates a force in line with each cell (312) and in the direction of the latter, the mechanism being characterised in that this recess (211) is open laterally and in that the band support (50) which comprises a reinforcement (53) and an aperture (55) is associated with the body (20) in such a way that its aperture (55) has the base (21) and the guide (30) passing through it, and in such a way that its reinforcement (53) can engage into a cell (312) and rest against a stay (313) or travel in the recess (211), the force generated by the spring (40) normally laying the reinforcement (53) into a cell (312).

2.  Mechanism according to Claim 1, characterised in that the guide (30) comprises an element in the form of a bar (31) terminating in stanchions (32) and is seated in the recess (211) and of which the face opposite the base (21) is provided with a clearance (311) and carries the cells (312) with their stays (313) in order to receive the reinforcement (53) of the band support (50).

3.  Mechanism according to Claim 1, characterised in that the body (20) possesses lateral flanks (23) directed towards the mounts (22), and the guide (30) consists of clearances (311) made in the flanks (23) and of notches (231) made in the latter in order to form the cells (312).

4.  Mechanism according to Claim 3, characterised in that the notches (231) are edged with lugs (232) bent to form the stays (313).

5.  Mechanism according to any one of Claims 1 to 4, characterised in that the stays (313) are curved to allow the transverse tilting of the band support (50) in at least one direction in relation to the body (20).

6.  Mechanism according to any one of Claims 1 to 5, characterised in that the spring (40) has a web (41) with two blades (42) acting in line with the cells (312) and with two wings (411) for fastening to the guide (30).

7.  Mechanism according to any one of Claims 1 to 6, characterised in that the reinforcement (53) takes the form of a rod (531) with multiple elbows.

8.  Mechanism according to any one of Claims 1 to 7, characterised in that the body (20) has the shape of a stirrup where each anchoring mount (22) has a branch (221) perpendicular to the base and terminating in a rim (222).

9.  Mechanism according to any one of Claims 1 to 8, characterised in that the band support (50) is pierced with a passage (54) which a band can pass through freely and in which the latter can travel.

**Patentansprüche**

1.  Haltemechanismus für ein Gurtband eines Sicherheitsgurtes mit manuell verstellbarer Position, welcher dazu bestimmt ist, an einer Struktur (10) befestigt zu werden, welcher unter anderem besteht aus: einem Körper (20) mit einem Untersatz (21) und Verankerungssockeln (22) zu der Struktur (10), und einer Gurtbandstütze (50), die dem Körper (20) zugeordnet ist und bezüglich letzterem beweglich ist, in welcher der Untersatz (21) und die Verankerungssockel (22) des Körpers (20) so angeordnet sind, daß sie eine Aussparung (211) am Hinterteil des Untersatzes einrichten, wobei eine Führung (30), die sich rechts der Aussparung (212) befindet, mit zumindest zwei Buchsen (312) versehen ist, jeder von denen eine Auflage (313) zugeordnet ist, wobei zumindest eine Feder (14) eine Kraft senkrecht zu jeder Buchse (312) und in Richtung letzterer entwickelt, wobei der Mechanismus dadurch gekennzeichnet ist, daß die Aussparung (211) seitlich geöffnet ist und daß die Gurtbandstütze (50), welche eine Verstärkung (53) und einen Ausschnitt (55) aufweist, dem Körper (20) so zugeordnet ist, daß sein Ausschnitt (55) durch den Untersatz (21) und die Führung (30) durchquert wird und derart, daß seine Verstärkung (53) mit einer Buchse (312) in Eingriff treten kann und gegen eine Auflage (313) zum Liegen kommen kann oder in der Aussparung (211) zirkulieren kann, wobei die von der Feder (40) entwickelte Kraft die Verstärkung (53) gewöhnlicherweise in eine Buchse (312) zwingt.

2.  Mechanismus nach Anspruch 1, dadurch gekennzeichnet, daß die Führung (30) ein stabförmiges Element (31) aufweist, welches in Stützen (32) endet, das in der Aussparung (211) untergebracht ist und dessen Stirnfläche gegenüber dem Untersatz (21) eine lichte Höhe (311) aufweist und die Buchsen (312) mit ihren Auflagen (313) trägt, um die Verstärkung (53) der Gurtbandstütze (50) aufzunehmen.

3. Mechanismus nach Anspruch 1, dadurch gekennzeichnet, daß der Körper (20) seitliche Seitenteile (23) aufweist, welche in Richtung der Sockel (22) ausgerichtet sind, und die Führung (30) aus lichten Höhen (311) besteht die in die Seitenteile (23) eingearbeitet sind, und aus Rasten (231), welche in letztere eingearbeitet sind, um die Buchsen (312) zu bilden.

4. Mechanismus nach Anspruch 3, dadurch gekennzeichnet, daß die Rasten (231) von Zungen (232) begrenzt werden, die gefaltet sind, um die Auflagen (313) zu bilden.

5. Mechanismus nach einem der vorhergehenden Ansprüche 1 bis 4, dadurch gekennzeichnet, daß die Auflagen (313) gekrümmt sind, um ein transversales Wippen in zumindest einer Stütztrichtung des Gurtbandes (50) bezüglich des Körpers (20) zu ermöglichen.

6. Mechanismus nach einem der Ansprüche 1 bis 5, dadurch gekennzeichnet, daß die Feder (40) ein Innenteil (41) mit zwei Blättern (42) aufweist, welche senkrecht zu den Buchsen (312) wirken, und mit zwei Befestigungsflügeln (411) an der Führung (30) aufweist.

7. Mechanismus nach einem der Ansprüche 1 bis 6, dadurch gekennzeichnet, daß die Verstärkung (53) die Form einer Stange (531) mit mehreren Biegungen darstellt.

8. Mechanismus nach einem der Ansprüche 1 bis 7, dadurch gekennzeichnet, daß der Körper (20) den Aufbau eines Steigbügels hat, bei dem jeder Verankerungssockel (22) einen Arm (221) aufweist, der normal zu dem Untersatz ist und durch einen Falz (222) abgeschlossen ist.

9. Mechanismus nach einem der Ansprüche 1 bis 8, dadurch gekennzeichnet, daß die Gurtbandstütze (50) Von einem Durchgang (54) durchstoßen ist, den ein Gurtband, welches in ihm zirkulieren kann, frei durchqueren kann.

## FIG.2

## FIG.1

FIG.4

FIG.3